## Europäisches Patentamt

## European Patent Office

## Office européen des brevets

(19)

(11) Numéro de publication: **0 021 966**
**B1**

(12)

# FASCICULE DE BREVET EUROPEEN

(45) Date de publication du fascicule du brevet:
22.08.84

(51) Int. Cl.³: **B 41 J 19/14**, G 01 S 15/08

(21) Numéro de dépôt: **80400863.9**

(22) Date de dépôt: **13.06.80**

(54) Imprimante à radar ultrasonique.

(30) Priorité: **19.06.79 FR 7915626**

(43) Date de publication de la demande:
**07.01.81 Bulletin 81/1**

(45) Mention de la délivrance du brevet:
**22.08.84 Bulletin 84/34**

(84) Etats contractants désignés:
**BE CH DE GB IT LI LU NL**

(56) Documents cités:
**US - A - 3 898 555**

**IBM TECHNICAL DISCLOSURE BULLETIN, vol. 20, no. 1, juin 1977, page 259 Armonk US R.R. LISK: "Electronic Keyboard"**

(73) Titulaire: **REALISATIONS ETUDES ELECTRONIQUES dite R2E, Avenue de Scandinavie, F-91403 Orsay (FR)**

(72) Inventeur: **Gernelle, François, 9, Square de Mondovi, F-78150 Le Chesnay (FR)**

(74) Mandataire: **Doireau, Marc, CII-Honeywell Bull Division Propriété Industrielle 94, avenue Gambetta Boîte Postale 33, F-75960 Paris cedex 20 (FR)**

ACTORUM AG

## Description

La présente invention concerne une imprimante, notamment du type par points comportant une tête d'impression mue par un système d'entraînement suivant une trajectoire rectiligne et comportant des moyens de localisation et des moyens d'asservissement de la tête d'impression sur sa trajectoire.

Dans le domaine des appareils d'impression sur papier ou sur d'autres types de supports d'enregistrement de données, de l'information contenue ou traitée par un ordinateur, on connaît différents types d'imprimantes constituées par un système d'impression et des systèmes d'entraînement du papier et du système d'impression et parmi lesquelles on distingue habituellement les imprimantes mécaniques et les imprimantes électrostatiques ou xérographiques.

Ce genre de dispositif inclut habituellement des moyens de localisation de la tête d'impression pour permettre un réglage automatique précis de cette dernière au niveau de l'emplacement des caractères et l'on connaît des imprimantes dans lesquelles on utilise par exemple des systèmes potentiométriques de type connu, qui sont reliés à un module d'asservissement de position commandant le moteur du système d'entraînement de la tête d'impression. Mais de tels systèmes ne s'avèrent pas toujours suffisamment précis, ou bien fournissent un asservissement relativement lent, en particulier dans le cas des imprimantes rapides par points, dans lesquelles la frappe des différents caractères s'effectue au moyen de la frappe d'un ensemble de points définissant chaque caractère et dans lesquelles la vitesse est relativement élevée.

Dans le brevet US n° 3 898 555 est décrit un dispositif de localisation d'un élément mobile qui se déplace linéairement par rapport à un élément fixe. Ce dispositif de localisation comprend un aimant permanent solidaire de l'élément mobile, un générateur de signaux solidaire de l'élément fixe et un élément de liaison constitué par deux conducteurs de transmission aller et retour desdits signaux entre l'élément fixe et l'élément mobile. La distance séparant l'élément fixe de l'élément mobile est déterminée à partir du temps séparant l'émission d'un signal par le générateur et la réception d'un signal modifié par l'aimant.

La présente invention a pour but de développer un système de localisation de la tête d'impression d'une imprimante en mettant en œuvre un système simple, très précis et fiable de localisation, qui par ailleurs soit peu encombrant.

L'invention propose donc une imprimante, notamment du type par points, comportant une tête d'impression mue par un système d'entraînement suivant une trajectoire rectiligne et comportant des moyens de localisation et des moyens d'asservissement de la tête d'impression sur sa trajectoire, les moyens de localisation étant constitués par un système à ultra-sons comprenant un système émetteur porté par la tête d'impression et un système récepteur fixé au châssis de l'imprimante, et est caractérisée en ce que lesdits moyens de localisation incluent un dispositif de détection du nombre de périodes de l'onde entretenue entre l'émetteur et le récepteur, un système d'asservissement de fréquence comportant une mémoire de la position réelle en fin de ligne de la tête d'impression et une mémoire de la longueur étalon d'une ligne complémentée, envoyant leurs signaux à un additionneur, relié à un premier compteur, dont la sortie est raccordée à un deuxième compteur cumulatif totalisant les différences et commandant un convertisseur numérique/analogique dont le signal de sortie est ajouté à une tension fixe correspondant à la fréquence non corrigée et commande un oscillateur contrôlé en fréquence par la tension et chargé de corriger la fréquence.

A titre d'exemple on a décrit ci-dessous et illustré schématiquement aux dessins annexés une forme de réalisation de l'objet de l'invention.

La fig. 1 représente une vue partielle schématique de dessus de l'imprimante selon l'invention montrant essentiellement le dispositif d'impression et son système d'entraînement.

La fig. 2 représente une vue schématique en coupe du dispositif de la fig. 1, prise suivant la ligne II–II de la fig. 1.

La fig. 3 représente une vue plus détaillée d'un organe d'impression utilisé dans le dispositif des figs 1 et 2.

La fig. 4 représente le schéma synoptique du système de localisation de la tête d'impression de l'imprimante conforme à l'invention.

La fig. 5 représente un schéma plus détaillé d'une forme de réalisation du système de localisation de la fig. 4.

La fig. 6 représente le schéma-bloc d'un système d'asservissement de la fréquence utilisé dans le système de localisation conforme à l'invention.

La fig. 7 représente le schéma synoptique du système d'asservissement, conforme à l'invention, de la vitesse de déplacement du chariot portant la tête d'impression.

La fig. 8 représente un schéma plus détaillé du système combinatoire du système d'asservissement de la fig. 7.

La fig. 9 représente la table de vérité associée au schéma de la fig. 8.

La fig. 10 représente un schéma synoptique du système d'asservissement de vitesse et de position du chariot portant la tête d'impression.

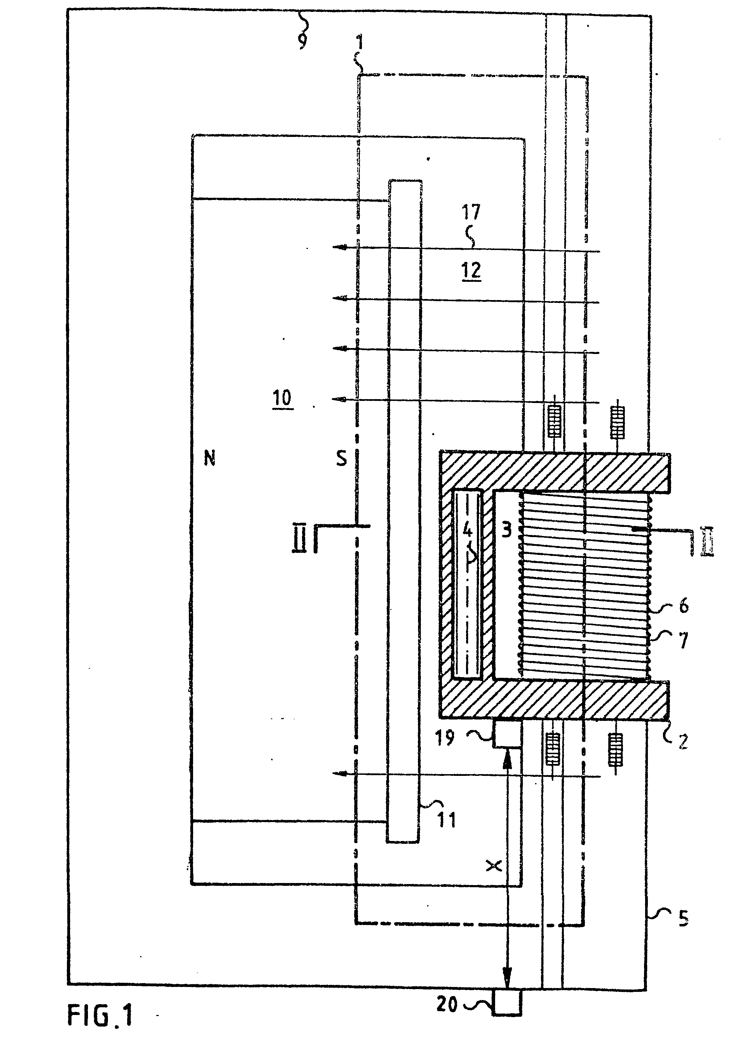

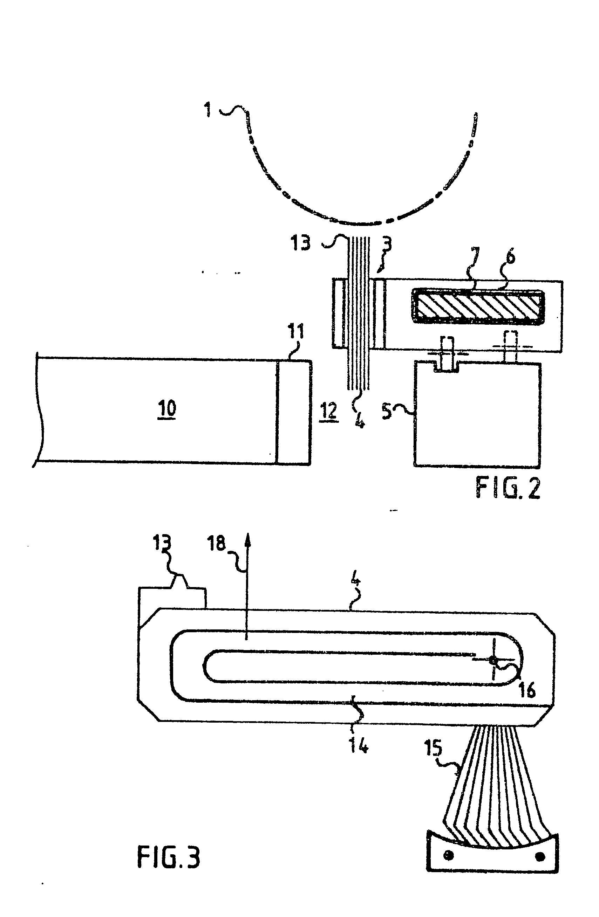

Sur les figs 1 et 2, on a représenté de façon très schématique les parties de l'imprimante essentielles pour la compréhension de l'invention. L'imprimante, notamment du type par points, comporte un cylindre 1, indiqué simplement par un trait mixte, devant lequel se déplace un chariot 2 portant la tête d'impression 3 formée de plusieurs, par exemple 7, marteaux d'impression 4 disposés côte à côte. Le chariot 2 circule sur un rail de guidage rectiligne 5, parallèle au cylindre 1, sur lequel est disposé un support d'enregistrement, tel qu'une feuille de papier, que viennent frapper les marteaux de la tête d'impression 3. Le déplacement du chariot 2 est réalisé au moyen d'un moteur linéaire dont l'induit est formé par un bobinage 6 enroulé sur un organe de support 7, par exemple une barre de duralumin, formant le corps du chariot qui circule dans son rail de guidage 5, au moyen d'un système de roulement approprié 8, par exemple des roulements à billes. A cet effet le rail de guidage 5 est constitué par une barre métallique horizontale dans laquelle se trouve ménagée une rainure rectiligne de section carrée ou rectangulaire parcourue par deux des organes de roulement d'un côté du chariot, les deux autres organes de roulement circulant latéralement, avec un léger décalage en hauteur, sur la barre ou dans une seconde rainure. Le système inducteur du moteur linéaire est constitué selon l'invention par un circuit magnétique formé d'une culasse fermée 9, ici en forme d'anneau rectangulaire, dont une branche longitudinale est formée par le rail de guidage 5 et qui enserre un aimant NS 10 muni d'une pièce polaire 11 séparée du rail 5 par un entrefer 12 et qui est fixé, sur son autre côté N à l'autre branche longitudinale de la culasse (voir fig. 1).

Comme on le voit sur les figs 1 et 2, la tête d'impression 3 porte des marteaux d'impression 4 qui sont constitués par des plaques planes parallèles entre elles à proximité immédiate les unes des autres et comportant une partie pointue 13 qui forme l'organe de frappe par point proprement dit. Ces marteaux d'impression peuvent être d'un type connu, par exemple d'après la demande de brevet français n° 7 305 754 et tel que représenté schématiquement sur la fig. 3. Un tel marteau d'impression 4 est essentiellement formé d'une ou de plusieurs spirales 14 découpées dans une plaque métallique plane de forme allongée munie d'une partie saillante pointue 13 servant à l'impression d'un point du caractère à représenter, et reliée à un organe de connexion 15 formé de languettes métalliques formant ressort de rappel et solidaires d'un pied servant à l'alimentation du marteau par un courant d'excitation approprié, ledit marteau pouvant pivoter autour d'un axe horizontal 16. Selon une forme de réalisation préférée, on utilise ainsi 7 marteaux parallèles entre eux à proximité immédiate les uns des autres et disposés verticalement sur la tête d'impression (voir fig. 2), de manière à se trouver en partie ou en totalité dans l'entrefer 12 du moteur linéaire.

Ci-après, on va expliciter le fonctionnement de l'imprimante, qui met en jeu un déplacement du chariot 2 entraîné à vitesse constante par le moteur linéaire à courant continu décrit le long de son rail de guidage, et une opération de frappe du caractère choisi, sous la forme d'un ensemble de points, par les marteaux d'impression 4 sous l'effet d'une excitation de commande adéquate.

Le déplacement du chariot est obtenu par commande du moteur linéaire, qui, comme cela est connu, consiste dans le cas présent à envoyer un courant d'excitation approprié dans le bobinage d'induit 6, qui est placé dans le champ inducteur (flèches 17 sur la fig. 1) du circuit magnétique déjà décrit, l'action combinée de ce courant d'excitation circulant dans le bobinage 6 et du champ inducteur créant une force d'entraînement du chariot, vers la droite ou la gauche le long de son rail de guidage, l'entrefer 12 s'étendant sur la majeure partie de la longueur du rail correspondant à la longueur d'impression désirée sur le cylindre de l'imprimante. Cette commande du moteur linéaire s'effectue au moyen d'un système classique du type amplificateur de sortie symétrique raccordé à un système d'asservissement du moteur, qui sera décrit ultérieurement. A titre d'exemple, le moteur fonctionne avec une vitesse de déplacement de 1 m/s.

En ce qui concerne la commande des marteaux d'impression 4, comme décrit dans la demande de brevet citée, il est nécessaire qu'ils soient placés dans un champ magnétique uniforme agissant perpendiculairement à leur plaque afin que l'action d'un courant d'excitation, envoyé dans la spirale plane conductrice qu'ils comportent, combinée au champ magnétique permanent existant perpendiculaire à la spire plane provoque, conformément à la règle d'Ampère, l'entraînement desdits marteaux (flèche 18) vers le haut, ceux-ci pivotant autour de leur axe 16. Pour ce faire l'invention prévoit d'utiliser comme champ magnétique le champ permanent du moteur linéaire en disposant les marteaux plats perpendiculairement à ce champ, sur la tête d'impression 3. Le courant de commande des marteaux d'impression 4 peut être produit par exemple par un amplificateur à deux transistors bloqués ou saturés simultanément et produisant le courant désiré en fonction du signal de commande.

Dans le cadre de la présente invention, on peut également imaginer d'intégrer totalement la tête d'impression portant les marteaux d'impression au moteur linéaire en vue de déplacer les marteaux de la tête d'impression complètement dans l'entrefer du moteur linéaire sans toutefois réduire leur performance et de miniaturiser à cet effet la tête d'impression.

Ci-après, on va décrire le système de localisation, conforme à l'invention, de la tête d'impression, ainsi que des systèmes d'asservissement de la vitesse et de la position de cette tête d'impression, permettant d'obtenir un fonctionnement correct, précis et fiable de l'imprimante.

Dans le système de localisation selon l'invention, on utilise un système de localisation à ultrasons. Ainsi, comme représenté sur les figs 1 et 2, on prévoit un émetteur d'ultra-sons 19 placé sur la tête d'impression et un récepteur fixe d'ultra-sons 20 monté sur un côté du châssis de l'imprimante, l'émetteur étant disposé en étant aligné sur le récepteur et se déplaçant parallèlement au rail de guidage 5, en étant à la même hauteur que le récepteur 20 par rapport au rail et à une distance x variable dudit récepteur.

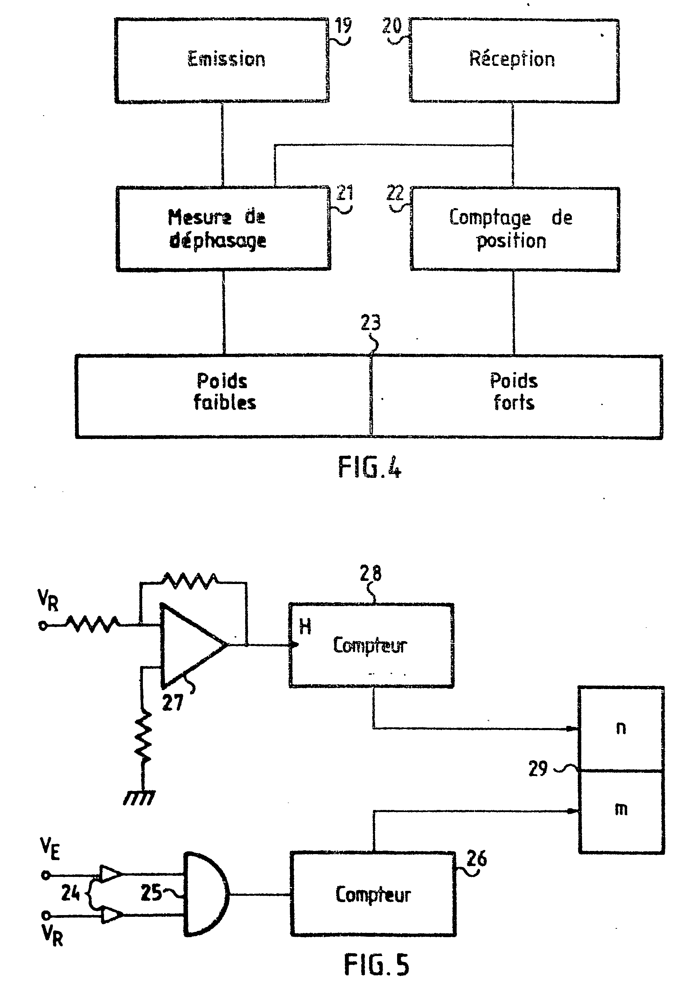

Sur la fig. 4 on a représenté le schéma synoptique du système de localisation selon l'invention. Le principe de la localisation ou détection consiste à comparer la phase du signal ultrasonore (onde pure entretenue) émis à celle du signal reçu par le récepteur, ce dernier et l'émetteur étant des transducteurs usuels. On mesure la différence de phase en comptabilisant les passages à zéro de la différence de phase, et l'on effectue la mesure du nombre de périodes $\lambda$ de l'onde entretenue entre l'émetteur et le récepteur, $\lambda$ étant égale à la largeur d'un caractère (2,5 mm) par suite du choix d'une fréquence de par exemple 137 kHz pour le système ultrasonique de localisation. Ceci a pour effet que chaque passage à zéro de la phase détermine le début d'un caractère, avec comme précision du système 1/64ᵉ de caractère. Conformément au schéma de la fig. 4, on réalise donc à partir de l'onde émise par l'émetteur 19 et de l'onde reçue par le récepteur 20 une mesure de déphasage dans le dispositif 21 de mesure de déphasage et un comptage de position dans un dispositif 22, les sorties de ces dispositifs 21 et 22 étant raccordées respectivement à un registre 3 de poids linéaires faibles et forts obtenus, avec affichage.

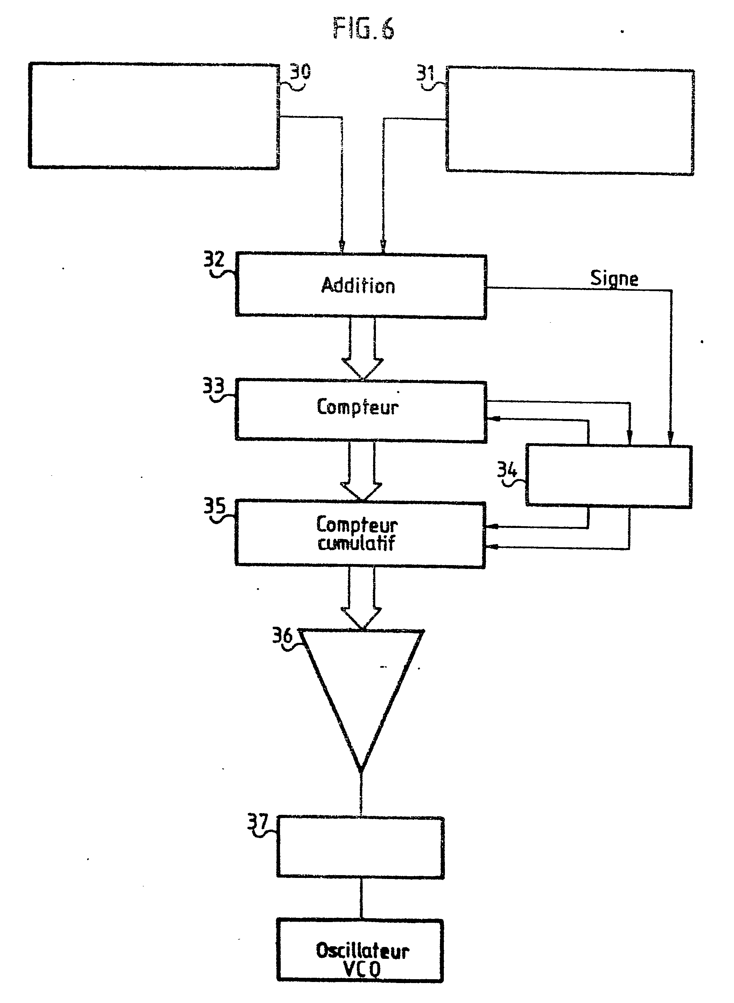

A titre d'exemple on a représenté sur la fig. 5 une forme de réalisation possible d'un tel système de localisation. Le dispositif 21 de mesure de déphasage est constitué par des amplificateurs classiques de mise en forme 24 et par une porte ET 25, dont la sortie est reliée à un compteur 26 approprié. Le dispositif 22 de comptage de position est formé par exemple d'un amplificateur usuel 27 dont la sortie est raccordée à l'entrée horloge H d'un compteur 28. Les sorties des compteurs 26 et 28 sont reliées à un registre 29 servant à l'affichage. On va maintenant décrire le fonctionnement du système de localisation de la tête d'impression. Le passage à zéro de la différence de phase entre l'onde émise $V_E$ et l'onde reçue $V_R$ est détecté par le dispositif 21 de mesure de déphasage (ensemble 24, 25). En outre le système de comptage de position 22 détecte chaque passage à zéro du signal émis, détecté par l'amplificateur 27. Le système 21 délivre son signal au compteur 26 qui totalise le nombre de points élémentaires de résolution nécessaire à la définition d'un caractère correspondant à $\lambda$, et transmet les bits de poids faibles au registre 29. Par ailleurs la sortie de l'amplificateur 27 étant reliée à l'entrée horloge du compteur 28 (qui peut être un compteur en anneau, qui est remis à zéro chaque fois que le chariot portant l'émetteur 19 revient en position de départ, à gauche de l'imprimante, contre le récepteur 20), ce compteur totalise le nombre de périodes parcourues par la tête d'impression et l'envoie sous la forme de bits de poids forts au registre 29. Ainsi par exemple pour un caractère de n points pour un codage de la position de la tête sur 14 bits, le compteur 26 effectue son comptage à m bits avec $2^m = n$, et le compteur 28 effectue son comptage à n bits.

Selon une variante de réalisation, on peut mesurer numériquement la différence de phase, et la coder sur 6 bits, comptabiliser les passages à zéro de la différence de phase avec, en définitive, un codage de la position sur 14 bits et, pour la visualisation, un affichage sur 4 digits hexadécimaux.

Naturellement le schéma de réalisation de la fig. 5 n'est donné qu'à titre d'exemple et l'on peut utiliser d'autres types de circuits ainsi que tout dispositif usuel approprié pour les compteurs.

Selon l'invention on prévoit un système d'asservissement de la fréquence de fonctionnement du système de localisation, car la vitesse de propagation d'une onde ultrasonore varie en fonction de la température, de la pression et de l'humidité de l'air, qui se reporte sur la longueur d'onde $\lambda$ ( = v vitesse/f fréquence) et donc sur la mesure de position, étant donné que la détection dépend de la mesure d'un retard de phase. En effet, lorsque la vitesse de propagation augmente d'un accroissement de la température, la longueur d'onde augmente. Arrivé en fin de ligne, on aura alors mesuré une position fausse. Par exemple, à 136 kHz, si v = 340 m/s (environ la vitesse à 20 °C), la longueur d'onde est de 2,5 mm, ce qui correspond à la longueur d'un caractère imprimé. Si la température augmente et passe à 40 °C, et donc v = 347 m/s, la longueur d'onde pour 136 kHz est alors de v/f = 347 : 136, soit environ 2,55 mm. On a alors 129 caractères par ligne de 33 cm et l'on a perdu 3 caractères. On comprend donc l'utilité d'asservir la fréquence pour conserver une longueur d'onde constante. Alors la position mesurée est exacte à la précision du comptage près.

Dans l'exemple on a v la vitesse de propagation qui passe à 347 m/s du fait de l'augmentation de température. Pour garder la longueur d'onde constante, il faut augmenter la fréquence. Cette fréquence est $f = v/\lambda = 347/2 \cdot 510^{-3} =$ 138,8 kHz, ce qui montre une variation de la fréquence de 2,06%. Pour effectuer cette correction de fréquence, on utilise un système décrit en référence à la fig. 6. Du point de vue du principe, le zéro des positions est situé au début et à gauche de la course du chariot, et, lorsque le chariot arrive en fin de ligne, après donc 33 com de course, la position affichée doit être 132 caractères, soit 1056 points et 8448 points de définition = 10 000 100 000 000 en binaire, soit 2100 en hexadécimal.

Lorsque la vitesse de propagation a varié, la position en fin de ligne est différente de 2100. Cette différence une fois mesurée et transformée en une tension va corriger directement la fréquence par un oscillateur contrôlé en fréquence par la tension V.

Dans une forme de réalisation représentée sur la fig. 6, pour effectuer la différence entre la position réelle en fin de ligne et 2100, la position réelle est mise en mémoire (mémoire 30) à l'instant où l'on déclenche le contact de fin de ligne, puis on en soustrait 2100 (complémentation en 31 et additionneur 32). La différence entre dans un compteur 33, donc le contenu est immédiatement transféré en + ou en −, suivant le signe, par un système de transfert 34 dans un deuxième compteur 35 qui cumule cette différence avec celle trouvée précédemment, et ce de manière à conserver la longueur d'onde constante malgré les modifications successives du milieu de propagation. Le contenu du deuxième compteur 35 transformé par un convertisseur numérique analogique 36 et divisé à la sortie 37 dans un rapport potentiométrique est ajouté à une tension fixe, qui correspond à la fréquence non corrigée et commande un oscillateur VCO contrôlé en fréquence par la tension.

L'imprimante selon l'invention comporte également un système d'asservissement de la vitesse de déplacement de la tête d'impression, qui est nécessité par la frappe à vitesse constante. Le système conçu est un asservissement numérique de la vitesse sur une vitesse de référence qui est donnée par l'organe de commande, selon que la tête d'impression effectue ou non une frappe, qu'elle se déplace dans un sens ou dans l'autre ou qu'elle soit à l'arrêt. La mesure réalisée de la vitesse est en fait la mesure du déplacement effectué dans des intervalles de temps réguliers. Cette base de temps est donnée par l'émetteur du système de localisation. La période du signal d'émission étant de 7,3 us (137 kHz), il est nécessaire de réduire cette fréquence avant de l'utiliser pour la mesure de la vitesse. En effet, à la vitesse maximum de déplacement de la tête d'impression (1 m/s), le temps mis pour parcourir un point de résolution est de l'ordre de 40 us et une mesure effectuée toutes les 7 us serait donc largement redondante. On divise donc la fréquence d'émetteur par 128, à l'aide de deux compteurs, ce qui la réduit à une valeur légèrement supérieure à 1 kHz. Dans ces conditions, à 1 m/sec, la variation de position entre deux mesures est de 27 points de résolution (1/64$^e$ de caractère), soit une variation des 5 derniers bits du mot indiquant la position, tandis qu'à 0,3 m/sec, on a un déplacement de 10 points, codé sur 3 bits du compteur de position.

Il apparaîtrait donc suffisant de ne considérer que les 5 derniers bits du compteur de position, mais on utilise 7 bits parce que, au cas où la vitesse serait légèrement supérieure à 1 m/s, le déplacement entre deux mesures pourrait dépasser 5 bits (32 points de résolution pour 1,2 m/s). Par conséquent on choisit d'effectuer les mesures sur 6 bits, ce qui permet de mesurer la vitesse jusqu'à 2 m/s, ce qui est tout à fait suffisant.

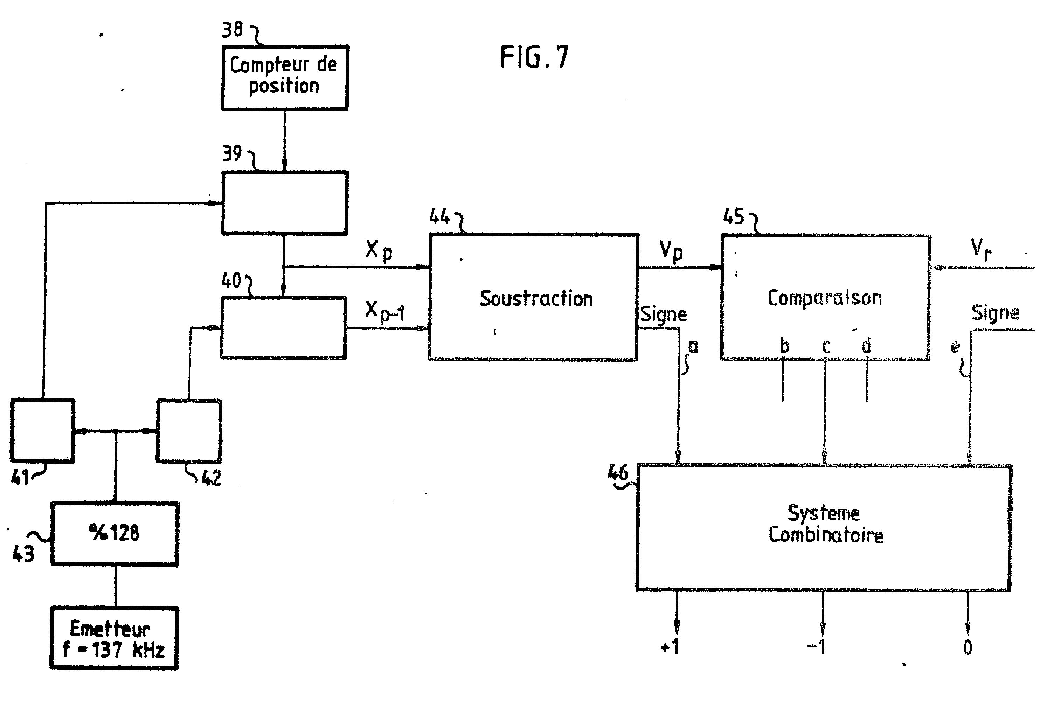

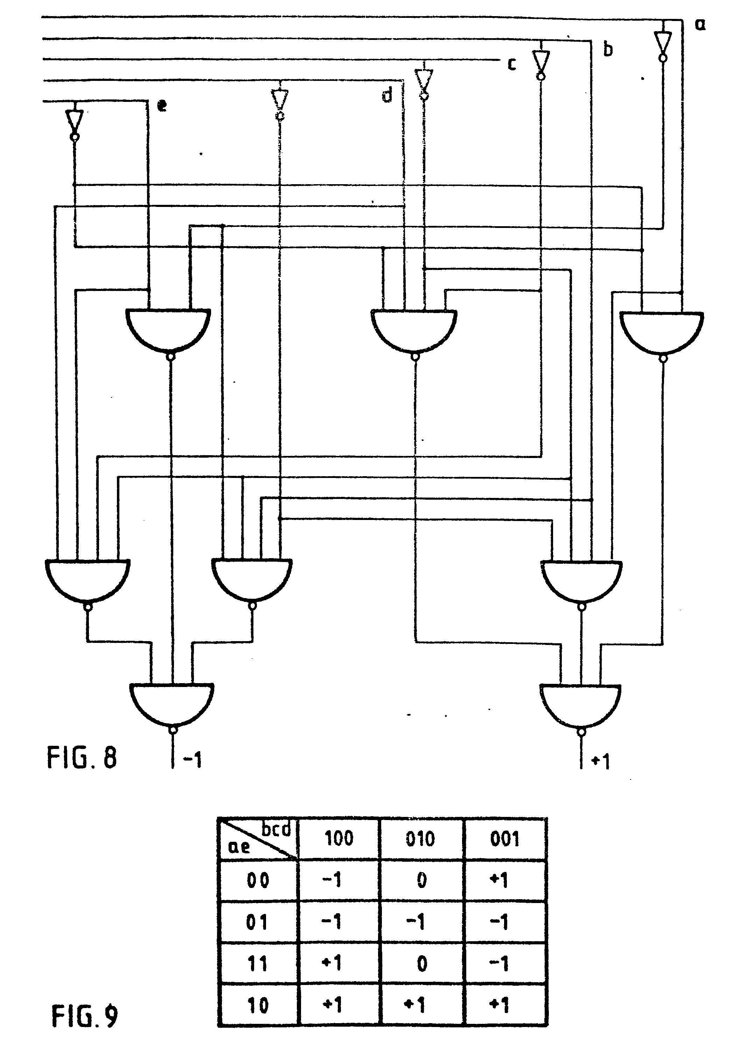

Sur la fig. 7, qui représente le schéma du système d'asservissement de vitesse de la tête d'impression on a représenté le compteur de position 38 raccordé à l'indicateur de position à 14 bits, et dont la sortie est reliée à une première bascule bistable 39 raccordée à une seconde bascule bistable 40. Les entrées de ces deux bascules 39, 40 sont reliées par des portes NON-ET respectives 41 et 42 à un dispositif à compteurs 43 constituant un diviseur par 128 qui délivre auxdites portes la fréquence d'émission de 137 kHz divisée par 128. Les deux bascules bistables sont raccordées entre elles et respectivement à un dispositif soustracteur 44, dont la sortie est reliée à un comparateur 45 aboutissant lui-même à un système combinatoire 46, dont le schéma détaillé est représenté sur la fig. 8 et qui est raccordé à l'amplificateur opérationnel de type classique du module d'asservissement du moteur.

Le fonctionnement de ce système est le suivant. A un instant $t_p$, on relève par l'intermédiaire de la bascule bistable 39 la position $x_p$ de la tête d'impression. Cet instant correspond au front descendant de l'impulsion à la sortie de la porte NON-ET 41, chargée d'indiquer la phase 1 ... 1 des compteurs 43. La sortie de la bascule bistable délivre la position $x_p$-1 relevée à l'instant précédent $t_p$-1. Ensuite, les valeurs de $x_p$ et $x_p$-1 sont soustraites dans le dispositif soustracteur 44, formé de deux additionneurs et de quelques inverseurs. Le résultat de cette opération $V_p$ est comparé à une valeur de référence $v_r$, fixée par l'utilisateur et qui correspond à la distance dont on veut que la tête d'impression se déplace entre deux instants de mesure. Un système combinatoire 46, prenant en compte le résultat de la comparaison, le signe de la vitesse de référence et le signe du déplacement observé, détermine s'il y a lieu d'accélérer positivement ou négativement. Lorsque ces opérations sont terminées, la position $x_p$ est envoyée dans la bascule bistable 40 et devient alors la position précédente. Cet instant est déterminé par la sortie de la porte NON-ET 42, qui décode la phase 1111101 des compteurs 43.

Sur la fig. 8, on a représenté de façon plus détaillée le système combinatoire du système de la fig. 7, qui est constitué de portes logiques classiques et qui est chargé de déterminer le sens de l'accélération à imposer à la tête d'impression. Pour ce faire, il dispose des informations suivantes:

— le sens de translation de la tête: c'est le bit de signe relevé à la sortie du dispositif soustracteur. La valeur 1 indique une vitesse mesurée négative, 0 une valeur positive (entrée a);

— le signe de la vitesse de référence avec les mêmes conventions que pour la vitesse mesurée. Cette valeur sera présente à l'entrée e;

— le résultat de la comparaison entre la vitesse mesurée $v_m$ et la vitesse de référence $v_r$. Le bit b indique que $v_m$ est supérieur à $v_r$, le bit c indique que $v_m$ est égale à $v_r$ et le bit d que $\overline{v_m}$ est inférieur à $v_r$.

Moyennant ces notations, on construit la table de vérité du système représentée sur la fig. 9. Les fonctions à synthétiser sont:

$$X1 = +1 = a\overline{e} + b\overline{c}\overline{d}a + \overline{e}\overline{b}\overline{c}\overline{d}$$
$$X2 = -1 = \overline{a}e + \overline{a}b\overline{c}\overline{d} + e\overline{b}\overline{c}d$$
$$0 = \overline{X1 + X2}$$

La construction de cette table est simple; en effet si a et e ont la même valeur, la tête se déplace dans la bonne direction. Il suffit alors d'ajuster la vitesse mesurée sur la vitesse de référence:

par exemple: a = 0　e = 0 (déplacement dans le sens 0)
　　　　b = 1　c = 0　d = 0 $v_m$ supérieur à $v_r$, il faut donc décélérer: — 1

Si a et e ne sont pas égaux, la tête se déplace dans le sens inverse de celui indiqué, il convient donc de faire changer le sens de mouvement = si $a = 1$ $e = 0$, il faut activer le $+1$ de façon à obtenir un mouvement dans le sens positif. Inversement si $a = 0$ $e = 1$.

Les fonctions $\overline{X1}$ et $X2$ sont synthétisées à l'aide de portes NON-ET de la façon suivante:

$$X1 = (a/\overline{e}) / (b/\overline{c}/\overline{d}/a) / (\overline{e}/\overline{b}/\overline{c}/d)$$
$$X2 = (\overline{a}/e) / (\overline{a}/b/\overline{c}/\overline{d}) / (e/\overline{b}/\overline{c}/d).$$

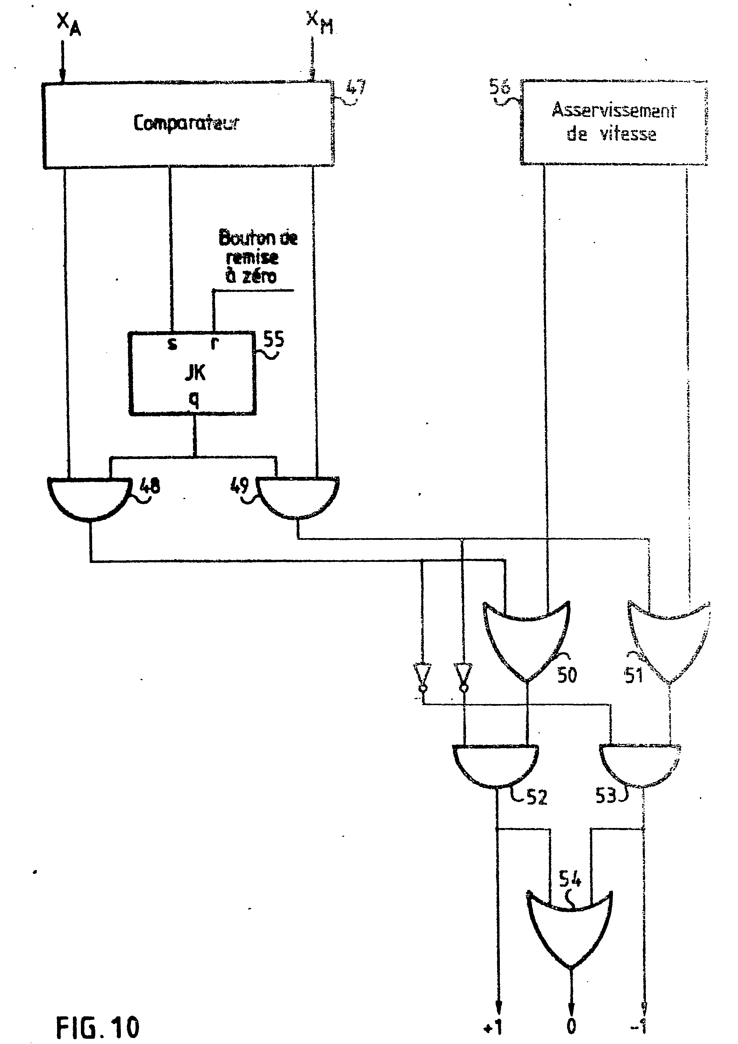

Sur la fig. 10 on a représenté le schéma synoptique du système d'asservissement de vitesse et de position du chariot portant la tête d'impression. En effet dans l'imprimante, il est souhaitable de pouvoir faire s'immobiliser la tête d'impression à un endroit précis après l'avoir fait se déplacer à une vitesse donnée. Le système permettant cet asservissement est le même que le système précédent d'asservissement de vitesse, complété par un asservissement de position. Le principe est le suivant: la tête d'impression étant supposée se trouver en un point M (abscisse $x_M$ variable) et se déplacer vers un point A d'abscisse $x_A$, à la vitesse V, on laisse agir le système d'asservissement de vitesse déjà décrit, seul, tant que le point A n'a pas été dépassé. Lorsque la tête d'impression est arrivée au niveau du point A, un système de positionnement décrit ci-après fait converger la tête vers la position A de la manière suivante.

Si la différence $x_A{-}x_M$ est positive, on effectue un «forçage à $+1$», c'est-à-dire que l'alimentation de l'amplificateur du module d'asservissement du moteur s'effectue avec une tension $+U$.

Si la différence $x_A{-}x_M$ est négative, on effectue un «forçage à $-1$», c'est-à-dire que l'alimentation de l'amplificateur s'effectue avec une tension $-U$.

Une fois l'objectif atteint, les forçages sont réunis à zéro.

Le système utilisé à cet effet comporte un comparateur 47, comparant $x_M$ à $x_A$ et délivrant à ses sorties des signaux correspondant aux états: $x_A{-}x_M$ supérieur à zéro; $x_A{-}x_M$ et qui sont envoyés à un système de type usuel de portes logiques 48 à 545 incluant une bascule de type JK 55 et recevant également les signaux du système d'asservissement de vitesse représenté en 56. Les sorties désignées par $+1$, $-1$ et 0 commandant l'amplificateur du module d'asservissement du moteur non représenté.

Naturellement la présente invention a été décrite en référence à une réalisation particulière donnée à titre d'exemple non limitatif.

## Revendications

1. Imprimante, notamment du type par points, comportant une tête d'impression (3) mue par un système d'entraînement suivant une trajectoire rectiligne et comportant des moyens de localisation et des moyens d'asservissement de la tête d'impression (3) sur sa trajectoire, les moyens de localisation étant constitués par un système à ultra-sons comprenant un système émetteur (19) porté par la tête d'impression (3) et un système récepteur (20) fixé au châssis de l'imprimante, caractérisée en ce que lesdits moyens de localisation incluent un dispositif de détection (22) du nombre de périodes de l'onde entretenue entre l'émetteur (19) et le récepteur (20), un système d'asservissement de fréquence comportant une mémoire (30) de la position réelle en fin de ligne de la tête d'impression et une mémoire (31) de la longueur étalon d'une ligne complémentée, envoyant leurs signaux à un additionneur (32), relié à un premier compteur (33), dont la sortie est raccordée à un deuxième compteur (35) cumulatif totalisant les différences et commandant un convertisseur numérique/analogique (36) dont le signal de sortie est ajouté à une tension fixe correspondant à la fréquence non corrigée et commande un oscillateur (VCO) contrôlé en fréquence par la tension et chargé de corriger la fréquence.

2. Imprimante suivant la revendication 1, caractérisée par le fait que ledit système à ultra-sons inclut un dispositif (21) de mesure du déphasage entre l'onde émise et l'onde reçue et de codage du déphasage mesuré pour définir la position de la tête (3) à l'intérieur de l'espace réservé à un caractère.

3. Imprimante suivant la revendication 1 ou 2, caractérisée par le fait que les moyens d'asservissement de la tête d'impression sont constitués par un moteur linéaire permettant de déplacer la tête (3) sur sa trajectoire et commandé par un dispositif de comparaison de la distance mesurée par les moyens de détection à une distance de consigne en vue de supprimer l'écart entre la valeur de consigne et la valeur détectée.

4. Imprimante suivant la revendication 3, caractérisée par le fait que les moyens d'asservissement de la tête d'impression (3) comprennent en outre des moyens pour corriger la vitesse du moteur, comprenant des mémoires (39, 40) enregistrant les distances parcourues dans des intervalles de temps successifs et un comparateur (45) des distances mémorisées pour délivrer un signal ($V_p$) proportionnel à la vitesse du chariot (2), qui est alors comparée à un signal de référence ($V_r$) pour supprimer l'écart réciproque du signal précédent à ce dernier.

5. Imprimante suivant la revendication 3 ou 4, caractérisée en ce que l'induit (6) du moteur linéaire est bobiné sur le chariot (2) et que son inducteur est un circuit magnétique constitué par une culasse (9) fermée incluant le rail de guidage (5) et enserrant un aimant (10) séparé du rail de guidage par un entrefer (12) et fixé, sur son autre côté, à la branche de la culasse (9), située à l'opposé du rail (5).

## Claims

1. Printer, in particular of the dot matrix type, comprising a printing head (3) displaced by a driving system along a straight path and comprising means for locating and means for controlling the printing head (3) along its path, the locating means being formed by an ultrasonic system comprising a transmitter system (19) carried by the printing head (3) and a receiver system (20) secured on the chassis of the printer, characterised in that the said locating means incorporate a device (22) for detection of the number of cycles of the continuous wave between the transmitter (19) and the receiver (20), a frequency control system comprising a memory (30) holding the true position of the printing head at the end of a line and a memory (31) holding the standard length of a complemented line, feeding their signals to a summator (32) connected to a first counter (33) whose output is connected to a second cumulative counter (35) totalling the differences and operating a digital/analog converter (36) whose output signal is added to a constant voltage corresponding to the uncorrected frequency and controls an oscillator (VCO) whose frequency is controlled by the voltage and which operates to correct the frequency.

2. Printer according to claim 1, characterised in that the said ultrasonic system incorporates a device (21) for measuring the phase shift between the wave transmitted and the wave received and for coding of the phase shift measured in order to establish the position of the head (3) within the space reserved for a character.

3. Printer according to claim 1 or 2, characterised in that the means for controlling the printing head are formed by a linear motor enabling the head (3) to be displaced along its path and controlled by a device for comparing the distance measured by the detection means with a nominal distance for the purpose of eliminating the difference between the nominal value and the detected value.

4. Printer according to claim 3, characterised in that the means for controlling the printing head (3) also comprise means for correcting the speed of the motor, comprising memories (39, 40) recording the distances travelled during successive time periods, and a device (45) for comparing the distances recorded in order to deliver a signal (Vp) proportional to the speed of the carriage (2) which is then compared to a reference signal (Vr) in order to eliminate the mutual difference between the preceding signal and this latter.

5. Printer according to claim 3 or 4, characterised in that the armature (6) of the linear motor is wound on the carriage (2) and that its inductor is a magnetic circuit formed by a closed yoke (9) including the guiding rail (5) and enclosing a magnet (10) separated from the guiding rail by an air gap (12) and secured at its other side to the branch of the yoke (9) situated opposite to the rail (5).

**Patentansprüche**

1. Drucker, insbesondere Punktdrucker, mit einem Druckkopf (3), der durch ein Antriebssystem auf einer geradlinigen Bahn bewegt wird, und mit einer Einrichtung zur Lokalisierung sowie einer Einrichtung zur Nachführung des Druckkopfes (3) auf seiner Bahn, wobei die Lokalisierungseinrichtung gebildet ist aus einem Ultraschallsystem, welches ein von dem Druckkopf (3) getragenes Sendesystem (19) und ein am Aufbau des Druckers befestigtes Empfangssystem (20) enthält, dadurch gekennzeichnet, dass die Lokalisierungseinrichtung eine Detektionsvorrichtung (22) zur Erfassung der Anzahl von Perioden der zwischen dem Sender (19) und dem Empfänger (20) aufgebauten Schwingung und ein Frequenzregelungssystem enthält, welches einen Speicher (30) zum Speichern der reellen Position des Druckkopfes am Ende der Zeile und einen Speicher (31) zum Speichern der Normlänge einer komplementierten Zeile enthält, die ihre Signale einem Addierer (32) zuführen, der an einen ersten Zähler (33) angeschlossen ist, dessen Ausgang mit einem zweiten Zähler (35) verbunden ist, der kumulierend arbeitet und die Differenzen aufsummiert sowie einen Digital-Analog-Umsetzer (36) ansteuert, dessen Ausgangssignal zu einer festen Spannung hinzugefügt wird, die der unkorrigierten Frequenz entspricht, und einen Oszillator (VCO) steuert, dessen Frequenz durch die Spannung gesteuert wird und dessen Funktion die Frequenzkorrektur ist.

2. Drucker nach Anspruch 1, dadurch gekennzeichnet, dass das Ultraschallsystem eine Vorrichtung (21) zur Messung der Phasenverschiebung zwischen der gesendeten Welle und der empfangenen Welle und zur Kodierung der gemessenen Phasenverschiebung enthält, um die Position des Kopfes (3) innerhalb des einem Drucktyp vorbehaltenen Raumes zu definieren.

3. Drucker nach Anspruch 1 oder 2, dadurch gekennzeichnet, dass die Einrichtung zur Nachführung des Druckkopfes gebildet ist aus einem linearen Motor, der eine Bewegung des Kopfes (3) auf seiner Bewegungsbahn ermöglicht und durch eine Vorrichtung zum Vergleichen der von der Detektionseinrichtung gemessenen Entfernung mit einer Sollwertentfernung gesteuert ist, um die Abweichung zwischen dem Sollwert und dem erfassten Wert zum Verschwinden zu bringen.

4. Drucker nach Anspruch 3, dadurch gekennzeichnet, dass die Einrichtung zur Nachführung des Druckkopfes (3) ferner Mittel zur Korrektur der Geschwindigkeit des Motors mit Speichern (39, 40), in denen die in den aufeinanderfolgenden Zeitintervallen durchlaufenen Strecken gespeichert sind, und einen Komparator (45) zum Vergleichen der gespeicherten Strecken enthalten, um ein Signal (Vp) zu erzeugen, das proportional zu der Geschwindigkeit des Wagens (2) ist und dann mit einem Bezugssignal (Vr) verglichen wird, um die reziproke Abweichung des Signals zum Verschwinden zu bringen, welches letzterer vorausgeht.

5. Drucker nach Anspruch 3 oder 4, dadurch gekennzeichnet, dass der Anker (6) des Linearmotors auf den Wagen (2) gewickelt ist und sein Induktor ein Magnetkreis ist, welcher gebildet ist aus einem geschlossenen Joch (9), welches die Führungsschiene (5) enthält und einen Magnet (10) umspannt, der von der Führungsschiene durch einen Magnetspalt (12) getrennt und auf seiner anderen Seite an demjenigen Schenkel des Joches (9) befestigt ist, der der Schiene (5) gegenüberliegt.

FIG.1

FIG.2

FIG.3

FIG.4

FIG.5

# FIG.6

# FIG.7

**38** Compteur de position

**39**

**40**

$X_p$

$X_{p-1}$

**44** Soustraction

$V_p$

Signe

a

**45** Comparaison

$V_r$

Signe

b  c  d  e

**41**  **42**

**43** %128

Emetteur
f = 137 kHz

**46** Systeme Combinatoire

+1  -1  0

17

0 021 966

FIG. 8

FIG. 9

| ae \ bcd | 100 | 010 | 001 |
|---|---|---|---|
| 00 | −1 | 0 | +1 |
| 01 | −1 | −1 | −1 |
| 11 | +1 | 0 | −1 |
| 10 | +1 | +1 | +1 |

0 021 966

FIG. 10